(19) Europäisches Patentamt / European Patent Office / Office européen des brevets

(11) **EP 4 171 133 A1**

(12) **EUROPEAN PATENT APPLICATION**
published in accordance with Art. 153(4) EPC

(43) Date of publication:
**26.04.2023 Bulletin 2023/17**

(21) Application number: **21827851.3**

(22) Date of filing: **10.05.2021**

(51) International Patent Classification (IPC):
**H04W 64/00** (2009.01)          **H04W 4/02** (2018.01)
**H04W 24/10** (2009.01)

(52) Cooperative Patent Classification (CPC):
**H04W 4/02; H04W 24/10; H04W 64/00**

(86) International application number:
**PCT/CN2021/092839**

(87) International publication number:
**WO 2021/258879 (30.12.2021 Gazette 2021/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.06.2020 CN 202010578321**

(71) Applicant: **ZTE Corporation
Shenzhen, Guangdong 518057 (CN)**

(72) Inventor: **SU, Meng
Shenzhen, Guangdong 518057 (CN)**

(74) Representative: **Canzler & Bergmeier
Patentanwälte
Partnerschaft mbB
Despag-Straße 6
85055 Ingolstadt (DE)**

(54) **MEASUREMENT REPORT NEIGHBORING CELL LIST-BASED POSITIONING METHOD AND SYSTEM**

(57) A measurement report neighboring cell list-based positioning method, comprising the following steps: obtaining measurement report data of a mobile terminal; performing sample data acquisition and processing on the measurement report data to obtain a neighboring cell combination list and store same to a sample database; and searching the sample database for latitude and longitude information of the mobile terminal. Embodiments of the present invention further provide a measurement report neighboring cell list-based positioning system.

FIG. 1

**Description**

**CROSS-REFERENCE TO RELATED APPLICATION**

This application is filed on the basis of Chinese Patent Application 202010578321.5 filed on June 23, 2020, and claims priority to the Chinese patent application, the entire contents of which are incorporated herein by reference.

**TECHNICAL FIELD**

The present disclosure relates to the technical field of communication, and in particular to a method and system for positioning based on a measurement report neighboring cell list.

**BACKGROUND**

At present, the network optimization means are mainly geographic positioning using a measurement report, mainly including satellite positioning, trigonometric calculation and fingerprint feature positioning.
However, the three methods have obvious disadvantages. Since the measurement of GPS signals has certain power consumption, most users do not turn on the Assisted Global Positioning System (AGPS) measurement switch when using mobile terminals, so this part of data cannot reflect the overall situation of all users in the network. Trigonometric positioning is to estimate the distance between the terminal and the base station based on the measurement indicators in the measurement report, for example, the Time Advance (TA) and the Reference Signal Received Power (RSRP) in the 4G network, and then position the terminal by geometric calculation based on the actual longitude and latitude of the base station. Since the estimated distance value is not accurate enough, the positioning error is large. Moreover, the geographical location calculated by geometry is prone to have arc-shaped and ray-shaped geometric calculation traces, so the rendering effect is not consistent with the actual situation of the network. The disadvantage of the fingerprint positioning lies in that the specific numerical value of the RSRP fluctuates greatly with the terminal types and locations (e.g., inside the car, indoor, outdoor) of different users or even weather, so that misjudgment may occur during searching in the sample library and large errors are caused. On the other hand, at the training stage of the fingerprint feature sample library, all AGPS measurement report data need to be collected and counted in grids, and the real-time performance is poor. In addition, at the positioning stage, the fingerprint matching degree of each measurement report needs to be calculated by a large number of grids one by one, so that the calculation amount is large, and more server calculation resources are occupied. Therefore, a positioning method with small positioning error, small calculation amount and high real-time performance is urgently needed to solve the above technical problems.

**SUMMARY**

In order to at least solve the above technical problems to a certain extent, the present disclosure provides a method and system for positioning based on a measurement report neighboring cell list.
The present disclosure provides a method for positioning based on a measurement report neighboring cell list. The method includes: acquiring measurement report data of a mobile terminal; performing sample data acquisition and processing on the measurement report data to obtain a neighboring cell combination list, and storing the neighboring cell combination list in a sample database; and, searching the sample database for longitude and latitude information of the mobile terminal.
The present disclosure further provides a system for positioning based on a measurement report neighboring cell list. The system includes a measurement report processing server, a mobile terminal and a base station. The measurement report processing server acquires and processes a measurement report data file of the mobile terminal from the base station, constructs a sample database using the formed neighboring cell combination list, and performs searching in the sample database according to the neighboring combination list to obtain a longitude and latitude corresponding to the mobile terminal. The mobile terminal measures a primary cell and neighboring cells, and reports measurement report data to the base station. The base station receives the measurement report data reported by the mobile terminal, stores the measurement report data in a file, and transmits the measurement report data file to the measurement report processing server.
The present disclosure further provides an electronic device. The device includes: a processer; and, a memory configured to store a computer-executable instruction which, when executed by the processor, causes the processor to implement the above-described method for positioning based on a measurement report neighboring cell list.
The present disclosure further provides a computer-readable storage medium, storing at least one program which, when executed by an electronic device containing a plurality of applications, causes the electronic device to implement the above-described method for positioning based on a measurement report neighboring cell list.

## BRIEF DESCRIPTION OF DRAWINGS

The accompanying drawings described herein are used for providing a further understanding of the present disclosure and constitute a part of the present disclosure. Illustrative embodiments of the present disclosure and descriptions thereof are used for illustrating the present disclosure, and are not intended to constitute an undue limitation to the present disclosure. In the accompanying drawings:

FIG. 1 is a flowchart of a method for positioning based on a measurement report neighboring cell list according to the present disclosure;
FIG. 2 is flowchart of determining whether the measurement report contains effective AGPS longitude and latitude information according to the present disclosure;
FIG. 3 is a schematic structural diagram of a system for positioning based on a measurement report neighboring cell list according to the present disclosure; and
FIG. 4 is a schematic structural diagram of an electronic device according to an embodiment of the present disclosure.

## DETAILED DESCRIPTION

In order to make the above objectives, features and advantages of the present disclosure obvious and comprehensible, the technical schemes in the embodiments of the present disclosure will be described below clearly and completely in conjunction with the accompanying drawings in the embodiments of the present disclosure. It is to be noted that the embodiments in the present disclosure and the features in the embodiments can be arbitrarily combined with each other if not in collision.

In the measurement report positioning method described in the present disclosure, for an ordinary measurement report not containing AGPS data, based on the neighboring cell list in the measurement report, the AGPS longitude and latitude can be searched for in the sample library according to the "primary cell + neighboring cell combination list", thereby realizing positioning calculation.

Embodiment I

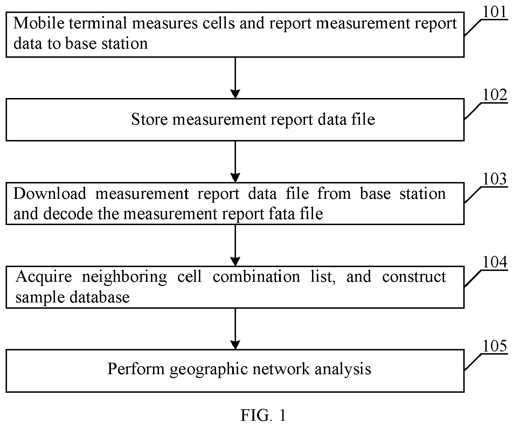

FIG. 1 is a flowchart of a method for positioning based on a measurement report neighboring cell list according to the present disclosure. The method for positioning based on a measurement report neighboring cell list according to the present disclosure will be described below in detail with reference to FIG. 1.

In this embodiment of the present disclosure, the neighboring cell relationships in the measurement report containing AGPS data are sorted according to a Reference Signal Received Power (RSRP) and then sampled to form a mapping relationship sample library of "primary cell + neighboring cell combination list -> AGPS longitude and latitude". For an ordinary measurement report not containing AGPS data, the AGPS longitude and latitude are searched for in the sample library according to the "primary cell + neighboring cell combination list", thereby realizing positioning calculation. The method includes following steps S101 to S105.

At S101, a mobile terminal measures a cell and reports measurement report data to a base station.

In this embodiment, when the mobile terminal roams in a mobile network, the mobile terminal continuously measures a primary cell and neighboring cells and reports measurement report data to the base station through a wireless network air interface. These indicators are the main bases for a handover decision at the base station side.

At S102, the base station stores the measurement report data.

In this embodiment of the present disclosure, the measurement report data is the main basis for a handover decision at the base station side, and the base station stores the measurement report data received from the terminal as a file.

At S103, the measurement report data file is downloaded from the base station and decoded.

In this embodiment of the present disclosure, a measurement report processing server downloads the measurement report file from the base statin through a File Transfer Protocol (FTP/SFTP), and decodes the measurement report data.

At S104, a neighboring cell combination list is acquired, and a sample database is constructed.

In this embodiment of the present disclosure, sample data acquisition is performed on the measurement report data containing AGPS data, neighboring cells in the AGPS measurement report are sorted according to the RSRP to obtain a neighboring cell combination list, a longitude and latitude corresponding to this neighboring cell combination list is recorded according to the primary cell to form a piece of sample data, and this piece of sample data is stored in a sample database. Under the actual network operation conditions, a large amount of sample data is accumulated to obtain the sample library.

If the measurement report contains effective AGPS longitude and latitude, the correspondence of "primary cell + neighboring cell combination list -> AGPS longitude and latitude" is recorded in the sample database.

The measurement report processing server performs positioning calculation on the ordinary measurement report not containing AGPS, and sorts neighboring cells in the measurement report according to the RSRP to obtain a neighboring cell combination list. Searching is performed in the sample library of the primary cell according to the neighboring cell combination list, and the corresponding longitude and latitude are obtained according to a search result.

The Assisted Global Positioning System (AGPS) is an operation mode of the GPS. With the AGPS, the mobile terminal of the user can be quickly positioned by utilizing data of the base station of the mobile communication network and in combination with the conventional GPS satellite.

At S105, network geographic analysis is performed.

In this embodiment of the present disclosure, the measurement report data containing longitude and latitude after the positioning calculation can be provided to a network optimization analysis system for network geographic analysis.

In this embodiment of the present disclosure, the neighboring cell relationships in the measurement report containing AGPS data are sorted according to the RSRP and then sampled to form a mapping relationship sample library of "primary cell + neighboring cell combination list -> AGPS longitude and latitude". For an ordinary measurement report not containing AGPS data, the AGPS longitude and latitude are searched for in the sample library according to the "primary cell + neighboring cell combination list", thereby realizing positioning calculation. Since the specific RSRP values of the primary cell and the neighboring cells are not only related to the location, but also related to some environmental factors, this scheme focuses on which neighboring cells are in the measurement report and relative strength relationship among a plurality of neighboring cells, rather than on the specific RSRP values of the neighboring cells.


Embodiment II


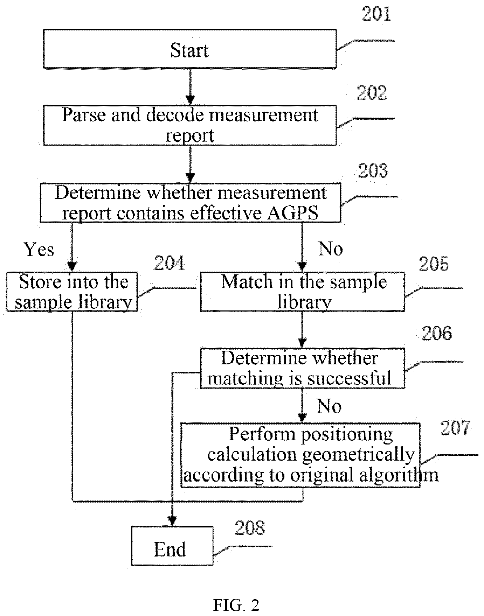

FIG. 2 is a flowchart of determining whether the measurement report contains effective AGPS longitude and latitude information according to the present disclosure. The process of determining whether the measurement report contains effective AGPS longitude and latitude information according to the present disclosure will be described below in detail with reference to FIG. 2. The process includes following steps S201 to S208.

At S201, the process starts.

In this embodiment of the present disclosure, the measurement report processing server downloads the measurement report file from the base station through a File Transfer Protocol (FTP/SFTP).

At S202, the measurement report is parsed and decoded.

At S203, it is determined whether the measurement report contains effective AGPS.

In this embodiment of the present disclosure, if it is determined that the measurement report contains effective AGPS, the process proceeds to S204; and, if it is determined that the measurement report does not contain AGPS, the process proceeds to S205.

At S204, sample data is stored in a sample library.

In this embodiment of the present disclosure, sample data acquisition is performed on the measurement report data containing AGPS data, neighboring cells in the AGPS measurement report are sorted according to the RSRP to obtain a neighboring cell combination list, the longitude and latitude corresponding to this neighboring cell combination list is recorded according to the primary cell to form a piece of sample data, and this piece of sample data is stored in the sample database.

A mapping relationship sample library of "primary cell + neighboring cell combination list -> AGPS longitude and latitude" can be formed.

Under the actual network operation conditions, a large amount of sample data is accumulated to obtain the sample library.

At S205, matching and searching are performed in the sample library.

In this embodiment of the present disclosure, for the ordinary measurement report not containing AGPS, the measurement report processing server may search in the sample library for AGPS longitude and latitude for positioning calculation according to the "primary cell + neighboring cell combination list", sorts neighboring cells in the measurement report according to the RSRP to obtain a neighboring cell combination list, searches in the sample library of the primary cell according to the neighboring cell combination list, and obtains the corresponding longitude and latitude according to a search result.

After the sample data expires, the sample data is automatically removed from the sample database by the background.

At S206, it is determined whether the matching is successful.

In this embodiment of the present disclosure, if the matching is successful, the process proceeds to S208. At this time, the longitude and latitude of the sample are acquired as the result of positioning. If the matching fails, the process proceeds to S207. Positioning calculation is performed geometrically according to an original algorithm. For example, the result of positioning is calculated according to the conventional trigonometric positioning.

At S207, positioning calculation is performed geometrically according to the original algorithm.

In this embodiment of the present disclosure, positioning calculation is performed geometrically according to the original algorithm. For example, the result of positioning is calculated according to the conventional trigonometric positioning, satellite positioning or other methods.

At S208, the process ends.

In this embodiment of the present disclosure, the longitude and latitude of the sample are acquired as the result of positioning.

In this embodiment of the present disclosure, in the sample library design, sorting may be performed according to the "primary cell + neighboring cell combination list", and quick searching can be performed by tree table lookup, dichotomy or in other ways. Since only the search operation is performed during positioning calculation in this method without a large number of calculation processes, the performance is very high, and the positioning calculation requirements for massive measurement report data can be satisfied by utilizing fewer server calculation resources.

In addition to the "primary cell + neighboring cell combination list" and the longitude and latitude, the number of samples also needs to be counted and recorded in the sample library. Since the accuracy of longitude and latitude can be very high, in order to merge multiple pieces of sample data of neighboring locations with minor errors in longitude and latitude, the longitude and latitude can be obfuscated and rounded to reserve four decimal places. For example, (112.1234111, 23.5711222) and (112.1233888, 23.5710666) have the same longitude and latitude (112.1234, 23.5711) after processing, and thus are considered as a same location for counting. After four decimal places are reserved after rounding, an error in longitude and latitude is less than 0.00005 degrees, and the maximum error is less than 8 m (the maximum error is near the equator), which is acceptable.

Due to a large uncertainty of the signal strength of the wireless network, there may be identical neighboring cell combination list in the AGPS measurement reports at different geographical locations, so that multiple records with the same "primary cell + neighboring cell combination list" but different longitudes and latitudes may exist in the sample library.

When positioning is performed on the non-AGPS measurement report, there is a situation where multiple records with different longitudes and latitudes are matched. In this case, the sample with the most occurrences may be selected, or the multiple records may also be subjected to enhanced averaging. For example:

Assuming that three different coordinate points (x1, y1), (x1, y2) and (x3, y3) are matched, and the number of samples is d1, d2 and d3, respectively. (x, y) may be calculated in the following way:

$$\begin{cases} x = \frac{1}{\sum_{i=1}^{3} d_i} \times \sum_{j=1}^{3}\left(d_j \times x_j\right) \\ y = \frac{1}{\sum_{i=1}^{3} d_i} \times \sum_{j=1}^{3}\left(d_j \times y_j\right) \end{cases}.$$

The mobile communication network is a system that is constantly adjusted and changes dynamically. For example, after a base station is newly added near a certain location, the neighboring cell list in the measurement report will be changed. Therefore, the measurement report sample also needs to be updated dynamically. An expiration date may be set, and the samples exceeding an expiration threshold (e.g., 15 days) should be removed from the sample library. Sample removing may be performed in the form of "negative hedging" to update the sample library, and the number of expired samples in the sample library is deducted. If the deducted number of the sample is 0, this sample will be deleted. For example:

After a sample of "C1+(C2,C3,C4,C5,C6)" with the longitude and latitude (112.1234, 23.5711) is added to the sample library on May 3 and May 5, 2020, respectively, the number recorded for this sample is 2.

| No. | Primary cell | Neighboring cell combination list | The number of samples | Longitude and latitude |
|---|---|---|---|---|
| 1 | C1 | (C2,C3,C4,C5,C6) | 2 | (112.1234, 23.5711) |

On May 18, since the sample on May 3 expires, the deducted number of samples is 1:

| No. | Primary cell | Neighboring cell combination list | The number of samples | Longitude and latitude |
|---|---|---|---|---|
| 1 | C1 | (C2,C3,C4,C5,C6) | 1 | (112.1234,23.5711) |

On May 20, since the sample on May 5 expires, the deducted number of the sample is 0:
Since the number is 0, this sample is deleted from the sample library:

| No. | Primary cell | Neighboring cell combination list | The number of samples | Longitude and latitude |
|-----|-------------|-----------------------------------|----------------------|------------------------|
|     |             |                                   |                      |                        |

Embodiment III

In this embodiment of the present disclosure, a mobile terminal measures a primary cell and neighboring cells and reports measurement report data to a base station, and the base station transmits the received measurement report data to a measurement report processing server.

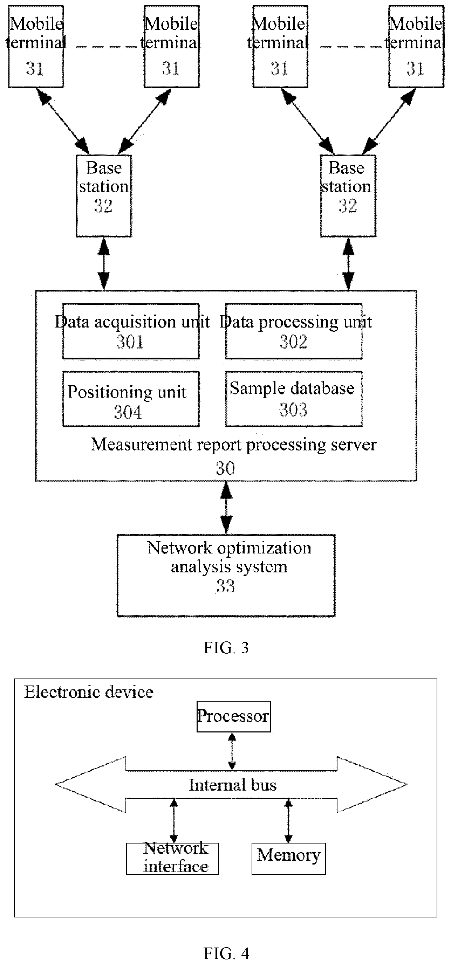

FIG. 3 is a schematic structural diagram of a system for positioning based on a measurement report neighboring cell list according to the present disclosure. As shown in FIG. 3, the system for positioning based on a measurement report neighboring cell list according to the present disclosure includes a measurement report processing server 30, a mobile terminal 31, a base station 32 and a network optimization analysis system 33.

The measurement report processing server 30 acquires a measurement report data file of the mobile terminal 31 from the base station 32, processes the measurement report data file, constructs a sample database using a formed neighboring cell combination list, searches in the sample database according to the neighboring cell combination list to obtain corresponding longitude and latitude, outputs measurement report data containing longitude and latitude data to the network optimization analysis system 33 for geographic network optimization analysis.

The mobile terminal 31 measures a primary cell and neighboring cells, and reports measurement report data to the base station 32 through a wireless network air interface.

The base station 32 receives the measurement report data reported by the mobile terminal 31 and stores the measurement report data as a file, receives a download request from the measurement report processing server 30, and transmits the measurement report data file to the measurement report processing server 30.

The network optimization analysis system 33 receives the measurement report data containing longitude and latitude transmitted by the measurement report processing server 30 for geographic network optimization analysis.

In this embodiment of the present disclosure, the measurement report processing server 30 further includes a data acquisition unit 301, a data processing unit 302, a sample database 303 and a positioning 304.

The data acquisition unit 301 transmits a download request to the base station 32, and downloads the measurement report data file from the base station 32.

The data processing unit 302 processes the measurement report data file downloaded by the data acquisition unit 301, sorts neighboring cells according to the RSRP to obtain a neighboring cell combination list, and transmits the neighboring cell combination list to the sample database 303.

In this embodiment of the present disclosure, the data processing unit 302 decodes the measurement report data file, sorts neighboring cells according to the RSRP to obtain a neighboring cell combination list, and stores the neighboring cell combination list in the sample database 303.

Sample data acquisition is performed on the measurement report data containing AGPS data, the data processing unit 302 sorts neighboring cells in the AGPS measurement report according to the RSRP to obtain a neighboring cell combination list, the longitude and latitude corresponding to this neighboring cell combination list is recorded according to the primary cell to form a piece of sample data, and this piece of sample data is stored in the sample database 303.

The sample data has a correspondence of: the primary cell + the neighboring cell combination list -> AGPS longitude and latitude.

During the positioning calculation of the measurement report not containing AGPS, the data processing unit 302 sorts neighboring cells according to the RSRP to obtain a neighboring cell combination list, and stores the neighboring cell combination list in the sample database 303.

The sample database 303 is configured to store the neighboring cell combination list and update the sample data.

The positioning unit 304 searches in the sample database according to the neighboring cell combination list, obtains corresponding longitude and latitude according to a search result, and transmits the measurement report data containing the longitude and latitude to the network optimization analysis system 303 for geographic network optimization analysis.

In this embodiment of the present disclosure, when the AGPS data is not contained, searching is performed in the sample database of the primary cell according to the neighboring cell combination list, and the corresponding longitude and latitude are obtained according to the search result.

After the sample data expires, the sample data is automatically removed from the sample database by the background.

Embodiment IV

FIG. 4 is a schematic structural diagram of an electronic device according to an embodiment of the present disclosure. As shown in FIG. 4, in the hardware level, the electronic device includes a processor. In some embodiments, the electronic device further includes an internal bus, a network interface and a memory. The memory may include an internal memory, for example, a Random-Access Memory (RAM), or may further include a non-volatile memory, for example, at least one disk memory, etc. Of course, the electronic device may further include hardware required for other services.

The processor, the network interface and the memory may be interconnected through the internal bus. The internal bus may be an Industry Standard Architecture (ISA) bus, a Peripheral Component Interconnect (PCI) bus, or an Extended Industry Standard Architecture (EISA) bus, etc. The bus may be classified into an address bus, a data bus, a control bus, etc. For ease of representation, the bus is represented by only one bold line in FIG. 4, but it does not mean that there is only one bus or one type of buses.

The memory is configured to store programs. The programs may include program codes, and the program codes include computer operated instructions.

The processor reads the corresponding computer programs from a non-volatile memory into the memory and then executes the computer programs, so that a shared resource access control device is formed in the logical level. The processor executes the programs stored in the memory to implement the following operations:

acquiring measurement report data of a mobile terminal;
performing sample data acquisition and processing on the measurement report data to obtain a neighboring cell combination list, and storing the neighboring cell combination list in a sample database; and
searching in the sample database for longitude and latitude information of the mobile terminal.

Embodiment V

An embodiment of the present disclosure further provides a computer-readable storage medium. The computer-readable storage medium stores at least one program including an instruction which, when executed by a portable electronic device including a plurality of applications, causes the portable electronic device to implement the method in the embodiments shown in the drawings, that is, the above-described method for positioning based on a measurement report neighboring cell.

In accordance with the method and system for positioning based on a measurement report neighboring cell list according to the present disclosure, the positioning accuracy is improved, and the problems of large trigonometric positioning errors and obvious geometric calculation traces in the results of positioning are solved. Compared with the conventional grid-based fingerprint feature positioning technology, the long-time background training process eliminated, and the sample library can be dynamically iterated and updated in real time. In addition, only a quick searching is required during positioning calculation, without having to match a large number of grids, so that the positioning performance is high, the server calculation resources required for positioning are greatly saved, and quick positioning can be achieved in real time for massive measurement reports.

Although the implementations of the present disclosure have been described above, the contents descried are only implementations for understanding the present disclosure and are not intended to limit the present disclosure. Without departing from the scope disclosed by the present disclosure, those having ordinary skills in the art to which the present disclosure belongs can make any modifications and alterations to the forms and details of implementation. However, the protection scope of the present disclosure shall be subjected to the scope defined by the appended claims.

**Claims**

1. A method for positioning based on a measurement report neighboring cell list, comprising:

acquiring measurement report data of a mobile terminal;
performing sample data acquisition and processing on the measurement report data to obtain a neighboring cell combination list, and storing the neighboring cell combination list in a sample database; and
searching in the sample database for longitude and latitude information of the mobile terminal.

2. The method of claim 1, wherein acquiring measurement report data of a mobile terminal further comprises:

reporting, by the mobile terminal, measurement report data to a base station;

saving, by the base station, the measurement report data in a file; and

downloading, by a measurement report processing server, the measurement report data file from the base station.

3. The method of claim 1, wherein performing sample data acquisition and processing on the measurement report data to obtain a neighboring cell combination list and storing the neighboring cell combination list in a sample database further comprises:

by the measurement report processing server, decoding the measurement report data, sorting neighboring cells according to a Reference Signal Received Power, RSRP, to obtain a neighboring cell combination list, and storing the neighboring cell combination list in a sample database.

4. The method of claim 3, further comprising:

performing sample data acquisition on the measurement report data containing Assisted Global Positioning System, AGPS, data, sorting neighboring cells according to the RSRP to obtain a neighboring cell combination list, recording longitude and latitude corresponding to the neighboring cell combination list according to a primary cell to form a piece of sample data, and storing the piece of sample data in the sample database, wherein the sample data has a correspondence of: the primary cell + the neighboring cell combination list -> AGPS longitude and latitude.

5. The method of claim 3, further comprising:

for the measurement report data not containing AGPS, searching in a sample library for AGPS longitude and latitude for positioning calculation according to the "primary cell + neighboring cell combination list", sorting neighboring cells according to the RSRP to obtain a neighboring cell combination list, and storing the neighboring cell combination list in the sample database.

6. The method of claim 1, wherein searching in the sample database for longitude and latitude information of the mobile terminal includes searching in the sample database according to the neighboring cell combination list, and obtaining corresponding longitude and latitude according to a search result.

7. The method of claim 1, further comprising: outputting the measurement report data containing the longitude and latitude in the sample database to a network optimization analysis system for geographic network optimization analysis.

8. A system for positioning based on a measurement report neighboring cell list, comprising a measurement report processing server, a mobile terminal and a base station, wherein:

the measurement report processing server is configured to acquire and process a measurement report data file of the mobile terminal from the base station, construct a sample database using a formed neighboring cell combination list, and perform searching in the sample database according to the neighboring combination list to obtain longitude and latitude corresponding to the mobile terminal;

the mobile terminal measures a primary cell and neighboring cells, and reports measurement report data to the base station; and

the base station receives the measurement report data reported by the mobile terminal, stores the measurement report data in a file, and transmits the measurement report data file to the measurement report processing server.

9. The system of claim 8, wherein the measurement report processing server further comprises a data acquisition unit, a data processing unit, a sample database and a positioning unit, wherein:

the data acquisition unit is configured to download the measurement report data file from the base station;

the data processing unit is configured to process the measurement report data file, sort neighboring cells according to a Reference Signal Received Power, RSRP, to obtain a neighboring cell combination list, and transmit the neighboring cell combination list to the sample database;

the sample database is configured to store the neighboring cell combination list and update the sample data; and

the positioning unit is configured to search for the longitude and latitude of the mobile terminal in the sample database according to the neighboring combination list.

10. The system of claim 9, wherein the data processing unit is configured to perform sample data acquisition on the measurement report data containing AGPS data, sort neighboring cells according to the RSRP to obtain a neighboring cell combination list, record longitude and latitude corresponding to the neighboring cell combination list according to a primary cell to form sample data, and store the sample data in the sample database.

11. The system of claim 9, wherein the data processing unit is configured to perform positioning calculation on the measurement report not containing AGPS, sort neighboring cells according to the RSRP to obtain a neighboring cell combination list, and store the neighboring cell combination list in the sample database.

12. The system according to claim 8, further comprising a network optimization analysis system which receives the measurement report data containing the longitude and latitude transmitted by the measurement report processing server, and performs geographic network optimization analysis.

13. An electronic device, comprising:

a processor; and
a memory, configured to store a computer-executable instruction which, when executed by the processor, causes the processor to perform the method for positioning based on a measurement report neighboring cell list of any one of claims 1 to 7.

14. A computer-readable storage medium, storing at least one program which, when executed by a processor, causes the processor to perform the method for positioning based on a measurement report neighboring cell list of any one of claims 1 to 7.

Mobile terminal measures cells and report measurement report data to base station — 101

Store measurement report data file — 102

Download measurement report data file from base station and decode the measurement report fata file — 103

Acquire neighboring cell combination list, and construct sample database — 104

Perform geographic network analysis — 105

FIG. 1

201

Start

202

Parse and decode measurement
report

203

Determine whether measurement
report contains effective AGPS

Yes

204

Store into the
sample library

No

205

Match in the sample
library

206

Determine whether
matching is successful

No

207

Perform positioning
calculation geometrically
according to original algorithm

208

End

FIG. 2

FIG. 3

FIG. 4

## INTERNATIONAL SEARCH REPORT

| International application No. |
|---|
| **PCT/CN2021/092839** |

**A.    CLASSIFICATION OF SUBJECT MATTER**

H04W 64/00(2009.01)i;  H04W 4/02(2018.01)i;  H04W 24/10(2009.01)i

According to International Patent Classification (IPC) or to both national classification and IPC

**B.    FIELDS SEARCHED**

Minimum documentation searched (classification system followed by classification symbols)

H04W G01S

Documentation searched other than minimum documentation to the extent that such documents are included in the fields searched

Electronic data base consulted during the international search (name of data base and, where practicable, search terms used)

DWPI, EPODOC, CNPAT, CNKI, 3GPP: AGPS , 定位, 主小区, 服务小区, 邻区 , 邻小区, 测量, 经纬度, Assisted Global Positioning System, primary, cell, PCI, neighbor, neighbor, measurement, latitude, longitude

**C.    DOCUMENTS CONSIDERED TO BE RELEVANT**

| Category* | Citation of document, with indication, where appropriate, of the relevant passages | Relevant to claim No. |
|---|---|---|
| X | CN 110972261 A (BEIJING HONGSHAN INFORMATION TECHNOLOGY INSTITUTE CO., LTD.) 07 April 2020 (2020-04-07)<br>    description paragraphs 0002, 0052-0063 | 1-14 |
| X | CN 109379698 A (SHENZHEN TYDIC INFORMATION TECHNOLOGY CO., LTD.) 22 February 2019 (2019-02-22)<br>    claims 1-4 | 1-14 |
| X | CN 110798804 A (ZTE CORPORATION) 14 February 2020 (2020-02-14)<br>    description paragraphs 0130-0152 | 1-14 |
| A | US 2010178932 A1 (HANSSON, Andreas) 15 July 2010 (2010-07-15)<br>    entire document | 1-14 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 July 2021** | **27 July 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

| | | International application No. |
|---|---|---|
| | | **PCT/CN2021/092839** |

| Patent document cited in search report | | | Publication date (day/month/year) | Patent family member(s) | | | Publication date (day/month/year) |
|---|---|---|---|---|---|---|---|
| CN | 110972261 | A | 07 April 2020 | None | | | |
| CN | 109379698 | A | 22 February 2019 | None | | | |
| CN | 110798804 | A | 14 February 2020 | WO | 2020024597 | A1 | 06 February 2020 |
| US | 2010178932 | A1 | 15 July 2010 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010578321